# EUROPEAN PATENT APPLICATION

(11) **EP 4 509 680 A1**
(43) Date of publication of application: **19.02.2025**
(21) Application number: 23788240.2
(22) Date of filing: 05.04.2023
(51) Int. Cl.: E04G 23/00, E04B 1/20, E04B 1/22, E04B 1/35

(54) **METHOD FOR REUSING PRECAST MEMBER OF BUILDING, METHOD FOR REUSING BUILDING, AND EVALUATION SYSTEM FOR REUSING PRECAST MEMBER OF BUILDING**

(30) Priority: 13.04.2022 JP 2022066052
(71) Applicant: Sumitomo Mitsui Construction Co., Ltd., Tokyo 104-0051 (JP)
(72) Inventor: KASUGA, Akio, Tokyo 104-0051 (JP)
(74) Representative: Ipsilon Benelux
(86) International application number: PCT/JP2023/014076
(87) International publication number: WO 2023/199821

(57) **Abstract**

To make it possible to ensure the quality of the precast members used in a building, and moreover to make it possible to construct a safe building by reusing the precast members.

In a reuse method for precast members of a building 1 having a rigid frame structure, when a building 1 provided with multiple precast members including multiple pillar members 13 and multiple beam members (11, 12) is constructed, a sensor 55 is attached to at least one of those of the precast members that are joined to each other by unbonded tendons (26, 36, 46) (ST5). During use of the building 1, the physical quantity P of the precast member detected by the sensor 55 is monitored (ST6). When the building 1 is dismantled, the reusability of the precast member is determined based on the detection result of the sensor 55 (ST14), and the precast member determined to be reusable is reused in another building 1 to be constructed (ST16).

## Description

### TECHNICAL FIELD

The present invention relates to a reuse method for precast members that configure a frame of a building having a rigid frame structure and that contain precast concrete, a reuse method for a building including precast members that configure a frame having a rigid frame structure and that contain precast concrete and multiple interior units disposed in the frame, and a reuse evaluation system for precast members of a building having a rigid frame structure.

### BACKGROUND ART

Conventionally, pillar members and beam members made of precast concrete are used as pillars and beams of a building having a rigid frame structure. These precast members are often rigidly connected to each other by using mechanical rebar joints and grouts.

In recent years, a frame structure of a building in which the precast members made of precast concrete are joined to each other by unbonded tendons is proposed (for example, see Patent Document 1). In such buildings, by releasing the connection by the unbonded tendons, the joining between the precast members is released so that the reuse of the members becomes possible.

### PRIOR ART DOCUMENT(S)

### PATENT DOCUMENT(S)

Patent Document 1: JP2021-161717A

### SUMMARY OF THE INVENTION

### TASK TO BE ACCOMPLISHED BY THE INVENTION

Precast members are manufactured at a factory under prescribed quality management, and are subjected to product inspection and shipping inspection, so that only those that have passed the inspection are shipped and used in construction of buildings. During construction of a building, the precast members are handled under prescribed construction management. When dismantling the building also, the precast members are handled under prescribed construction management.

However, the precast members may be damaged during use of the building, and with the conventional technology mentioned above, when the precast members suffer such damage, it is not possible to ensure the quality for reusing the precast members.

In view of the foregoing background, an object of the present invention is to make it possible to ensure the quality of the precast members used in a building, and moreover to make it possible to construct a safe building by reusing the precast members.

### MEANS TO ACCOMPLISH THE TASK

To achieve the above object, one aspect of the present invention provides a reuse method for precast members (11, 12, 13, 111, 113) of a building (1), wherein the precast members configure a frame (2 (2X, 2Y), 102) of the building having a rigid frame structure and contain precast concrete, the reuse method comprising: a step (ST5) of, when constructing the building provided with the multiple precast members including multiple pillar members (13, 113) and multiple beam members (11, 12, 111), attaching a sensor (55) for detecting a predetermined physical quantity (P) to at least one of the precast members, the at least one of the precast members being joined to another one of the precast members by an unbonded tendon (26, 36, 46); a step (ST6) of monitoring the physical quantity of the precast member detected by the sensor during use of the building; a step (ST14, ST22) of, when dismantling the building, determining reusability of the precast member based on a detection result of the sensor; and a step (ST16, ST26) of reusing the precast member determined to be reusable in another building to be constructed.

According to this aspect, by determining the reusability of the precast members used in the building, it is possible to ensure the quality of the precast members. Therefore, it is possible to construct a safe building by reusing the precast members.

In the above aspect, preferably, in the step (ST5) of attaching the sensor, the sensor is attached to the beam member when the building in which the beam members are joined to the pillar members by the unbonded tendons is constructed, and in the step (ST14) of determining the reusability of the precast member, reusability of the beam member is determined when dismantling the building.

According to this aspect, it is possible to determine the reusability of the beam members which are susceptible to damage due to earthquakes, and thereby to ensure the quality of the beam members.

In the above aspect, preferably, the pillar members (113) each have a hollow structure, and when the building is constructed, cast-in-place concrete (116) is casted in a hollow part (114) of each pillar member after the pillar members are erected at predetermined positions.

According to this aspect, the pillar members become lighter than when they have a solid structure. Therefore, the transportation efficiency of the pillar members improves, and moreover, they can be lifted by a small crane and thus are advantageous for construction in urban areas.

In the above aspect, preferably, the reuse method for precast members further comprises a step (ST14, ST24) of determining, by visual inspection, whether there is an abnormality in appearance on the beam member determined to be reusable, and the beam member is determined to be reusable only when there is no abnormality in appearance.

According to this aspect, it is possible to prevent the beam members having an abnormality in appearance that cannot be recognized from the physical quantity from being reused. Thus, buildings constructed by reusing the beam members can be made safer.

In the above aspect, preferably, the reuse method for precast members further comprises: a step of performing (ST13, ST28), after the building is dismantled, prescribed inspection on the precast member and determining (ST14, ST29) a degree of damage of the precast member based on the detection result of the sensor and a result of the prescribed inspection; and a step (ST18, ST31) of repairing the precast member depending on the degree of damage to bring the precast member into a reusable state.

According to this aspect, by performing prescribed inspection after the building is dismantled, it is possible to repair the precast members into a reusable state. Therefore, in addition to reliably ensuring the quality of the precast members, it is possible to increase the number of precast members that can be reused. Thus, the amount of CO₂ emission due to manufacture of the precast members can be reduced.

To achieve the above object, another aspect of the present invention provides a reuse method for a building (1) including precast members (11, 12, 13, 111, 113) that configure a frame (2 (2X, 2Y), 102) having a rigid frame structure and that contain precast concrete and multiple interior units (50) disposed in the frame, the reuse method comprising: a step (ST5) of, when constructing the frame provided with multiple precast members including multiple pillar members (13, 113) and multiple beam members (11, 12, 111), attaching a sensor (55) for detecting a predetermined physical quantity (P) to at least one of the precast members, the at least one of the precast members being joined to another one of the precast members by an unbonded tendon (26, 36, 46); a step (ST6) of, during use of the building, monitoring the physical quantity of the precast member detected by the sensor; a step of performing (ST13, ST28) prescribed inspection on the precast member after dismantling the building and determining (ST14, ST29) a degree of damage of the precast member based on a detection result of the sensor and a result of the prescribed inspection; a step (ST18, ST31) of repairing the precast member according to the degree of damage; a step (ST13, ST25) of checking up matters related to whether to permit reuse of the interior units; a step (ST16, ST26) of reusing the precast member in an other building to be constructed; and a step (ST16, ST26) of reusing the interior units in the other building.

According to this aspect, it is possible to more reliably ensure the quality of the precast members, and thus, it is possible to improve the reliability of the frame of the building that uses the precast members and to ensure the quality of the interior units disposed in the frame.

In the above aspect, preferably, the reuse method for a building further comprises a step (ST7) of providing a predetermined section of the building for limited time use.

According to this aspect, since the use of the predetermined section is time limited, it is possible to deal with replacement or change of use of the members in this section based on a plan. Thus, it is possible to more reliably ensure the quality of the precast members and to enhance the reliability of the frame of the building that uses the precast members.

To achieve the above object, another aspect of the present invention provides a reuse evaluation system (100) for precast members of a building (1), the reuse evaluation system being configured for evaluating reusability of precast members (11, 12, 13, 111, 113) that configure a frame (2 (2X, 2Y), 102) of the building having a rigid frame structure and that contain precast concrete, wherein the building is provided with multiple precast members including multiple pillar members (13, 113) and multiple beam members (11, 12, 111), the reuse evaluation system comprising: a sensor (55) configured to be attached to at least one of the precast members of the building to measure a predetermined physical quantity (P), the at least one of the precast members being joined to another one of the precast members by an unbonded tendon (26, 36, 46); and a monitoring device (60) comprising a storage device (62) for storing a detection result of the sensor, the monitoring device being configured to make the storage device store the physical quantity of the precast member during use of the building and to monitor the physical quantity, wherein the monitoring device is configured to determine the reusability of the precast member based on the detection result of the sensor.

According to this aspect, by determining the reusability of the precast members used in the building, it is possible to ensure the quality of the precast members. Therefore, it is possible to construct a safe building by reusing the precast members.

In the above aspect, preferably, the monitoring device is configured to determine whether the physical quantity detected by the sensor is within a predetermined first reference value (Pth1), and to determine that the precast member is reusable when the physical quantity is within the first reference value (ST14, ST22).

According to this aspect, it is possible to objectively determine whether the precast member is reusable.

In the above aspect, preferably, the monitoring device is configured to determine that member replacement is necessary when, during use of the building, the physical quantity of the precast member exceeds a second reference value (Pth2) greater than the first reference value (ST8).

According to this aspect, even during use of the building, it is possible to determine whether the precast members have reached a state not suitable for use. Therefore, the safety of the building in which the precast members are used can be improved.

### EFFECT OF THE INVENTION

According to the above aspect, it is possible to ensure the quality of the precast members used in a building, and moreover to make it possible to construct a safe building by reusing the precast members.

### BRIEF DESCRIPTION OF THE DRAWINGS

[Figure 1] a perspective view showing a frame of a building according to the first embodiment, with part thereof being exploded
[Figure 2] (A) a side view (a view in the direction of arrow II in Figure 1) and (B) a sectional view (a B-B cross section in A) showing a connection structure for first beams
[Figure 3] (A) a side view and (B) a sectional view (a B-B cross section in A) of a part III in Figure 2
[Figure 4] (A) a side view (a view in the direction of arrow IV in Figure 1) and (B) a sectional view (a B-B cross section in A) showing a connection structure for second beams
[Figure 5] a side view showing a connection structure for pillars (a view in the direction of arrow IV in Figure 1)
[Figure 6] a perspective view of a building during construction work
[Figure 7] a configuration diagram of a reuse evaluation system
[Figure 8] a flowchart of a reuse method for precast members and a building during construction and use
[Figure 9] a flowchart of the reuse method for precast members and a building when dismantled
[Figure 10] a flowchart of the reuse method for precast members and a building when dismantled according to the second embodiment
[Figure 11] a front view of a building during construction work according to the third embodiment.

### MODE(S) FOR CARRYING OUT THE INVENTION

In the following, embodiments of the present invention will be described in detail with reference to the drawings. In the following description, "inner side" and "outer side" means an inner side and an outer side of an architectural structure.

### << First Embodiment >>

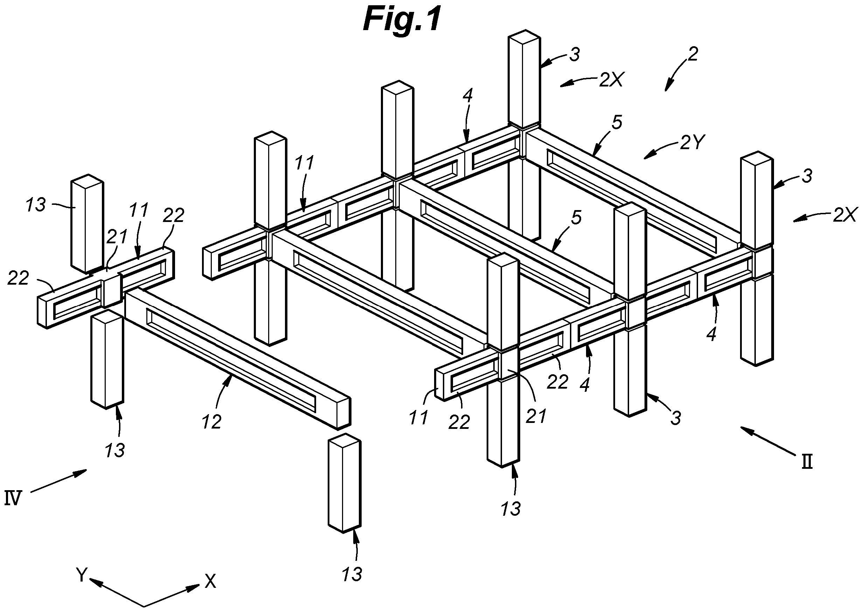

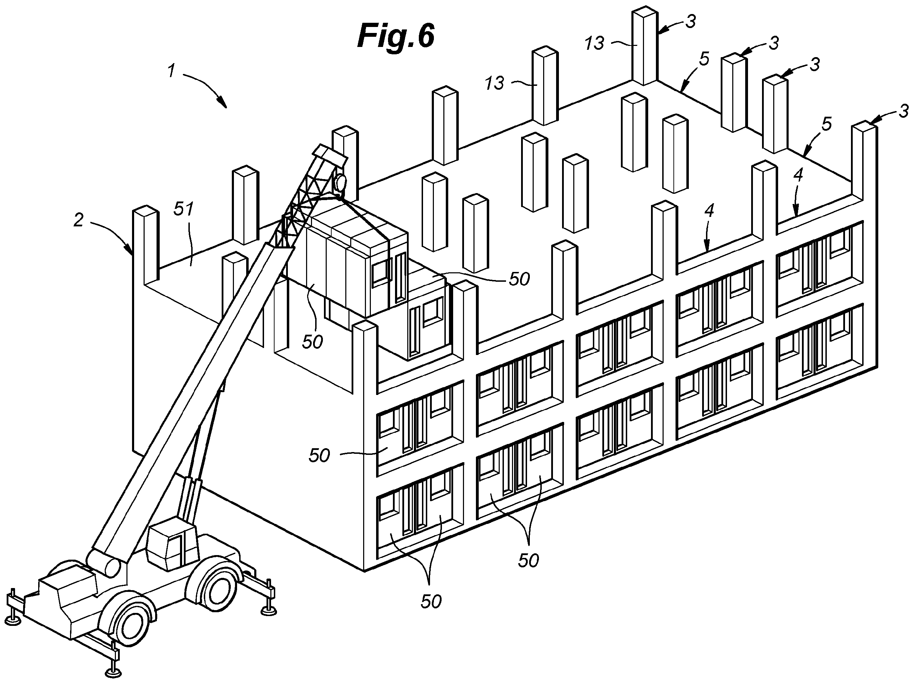

First, the first embodiment of the present invention will be described with reference to Figures 1 to 8. As shown in Figure 1, a frame 2 of a building 1 (see Figure 6) includes multiple pillars 3 made of reinforced concrete and arranged to be spaced from each other at predetermined intervals in the X direction and the Y direction intersecting on a horizontal plane. In the present embodiment, the pillars 3 are arranged in three or more rows in the X direction and in two rows in the Y direction. Thus, four pillars 3 disposed at end portions in the X direction are all corner pillars.

Here, the reinforced concrete means concrete-based material in which, to enhance the strength (particularly, tensile strength) of concrete, reinforcement members such as rebars, reinforced fibers (carbon fibers, glass fibers, aramid fibers, etc.), and PC members (elongated members for introducing prestress in the concrete; PC steel wires and PC steel rods, PC steel strands, FRP rods, or other linear or rod-shaped members) are embedded or mixed. The reinforced concrete may be reinforced concrete (RC), FRC (Fiber Reinforced Concrete), PRC (Prestressed Reinforced Concrete), or PC (Prestressed Concrete), and may be in another form so long as it contains concrete-based material as main material.

Multiple first beams 4 made of reinforced concrete and extending in the X direction are provided to extend Between the pillars 3, 3 adjacent to each other in the X direction, and these pillars 3, 3 and first beams 4 configure an X-direction frame 2X that extends in the X direction. Also, multiple second beams 5 made of reinforced concrete and extending in the Y direction are provided to extend between the pillars 3, 3 adjacent to each other in the Y direction, and these pillars 3, 3 and second beams 5 configure a Y-direction frame 2Y that extends in the Y direction. The first beams 4 and the second beams 5 are joined to the pillars 3 at positions overlapping with each other in the vertical direction. The joints between the pillars 3 and the first beams 4 and the joints between the pillars 3 and the second beams 5 configure common joints in the pillars 3 (with respect to the vertical direction).

Slabs not shown in the drawings are constructed above or at an upper portion of the first beams 4 and the second beams 5. The second beams 5 are longer than the first beams 4, and the pitch of the pillars 3 in the Y direction is greater than the pitch of the pillars 3 in the X direction. One or multiple small beams extending in the X direction may be provided to extend between two second beams 5, 5 adjacent to each other in the X direction. The first beams 4, the second beams 5, and the slabs are constructed in multiple layers at different positions in the vertical direction. Namely, the frame 2 has a multi-layered rigid frame structure.

With a configuration described later, this frame 2 is easy to assemble and dismantle and is reusable. Therefore, this frame 2 is suitable for time-limited architectural structures (such as Expo facilities, temporary housings or the like for disaster victims, architectural structures which are somewhere between temporary and permanent buildings). Also, the frame 2 is suitable for use to enlarge or reduce the size of the architectural structure, or to increase or decrease the height of the architectural structure. Further, the frame 2 may be used in architectural structures such as logistics warehouses, office buildings, apartment complexes, commercial facilities, etc.

The frame 2 is constructed by assembling multiple types of precast concrete members made of precast concrete (hereinafter referred to as precast members). These precast members include, for each layer, multiple first beam members 11, multiple second beam members 12, and multiple pillar members 13. Each first beam member 11 includes a joint part 21 joined to an upper surface of the pillar member 13 to form a joint of the pillar 3, and at least one first beam main body 22 integral formed with the joint part 21 and extending from the joint part 21 in at least one direction along the X direction to form a part of the first beam 4.

Each pillar member 13 forms a main body (in the illustrated example, the entirety of a part below the joint) of each pillar 3, and is joined to the upper surface of the joint part 21 of the first beam member 11 on the foundation or in the lower layer. Note that in cases where the handling of the pillar 3 is difficult such as when the floor height is high or the pillar 3 has a large cross sectional dimension and hence has a large weight, the pillar member 13 may be vertically divided so that the part of the pillar 3 for one layer excluding the joint part 21 may be configured by two or more precast members. In the present embodiment, each pillar member 13 is an RC precast member in which no prestress is introduced.

The j oint parts 21 of the first beam members 11 in the lower layer are joined to the upper surfaces of the pillar members 13 in the lower layer, and the pillar members 13 in the upper layer are joined to the upper surfaces of the joint parts 21 of the first beam members 11 in the lower layer, and by repeating these steps, the number of layers of the architectural structure increases. In other words, the pillar members 13 are provided between the first beam members 11 of the relevant layer (lower layer) and the first beam members 11 in the upper layer.

Each of the first beam members 11 joined to the upper surfaces of the pillar members 13 of the pillars 3 positioned at end portions in the X direction has a joint part 21 and one first beam main body 22. Each of the first beam members 11 joined to the upper surfaces of the pillar members 13 of the other pillars 3 has a joint part 21 and two first beam main bodies 22. These first beam members 11 have mutually different shapes, but here, they are collectively referred to as the first beam members 11. Each first beam main body 22 of each first beam member 11 configures a half beam part which is about a half part of the first beam 4. In another example, one of the first beam main bodies 22 of the first beam member 11 may have a different length from the other first beam main body 22. The two first beam members 11 that form a joint between the pillars 3 disposed adjacent to each other in the X direction are disposed to be continuous in the X direction such that the tip end surfaces of the first beam main bodies 22 thereof adjoin and oppose each other.

Each second beam member 12 forms the entirety of each second beam 5 and is formed as a separate member from the joint parts 21 of the pillars 3. In another example, each end portion of the second beam 5 may be integrally formed with the joint part 21 of the pillar member 13. Both ends of each second beam member 12 are joined to the joint parts 21 of a pair of pillars 3 disposed adjacent to each other in the Y direction.

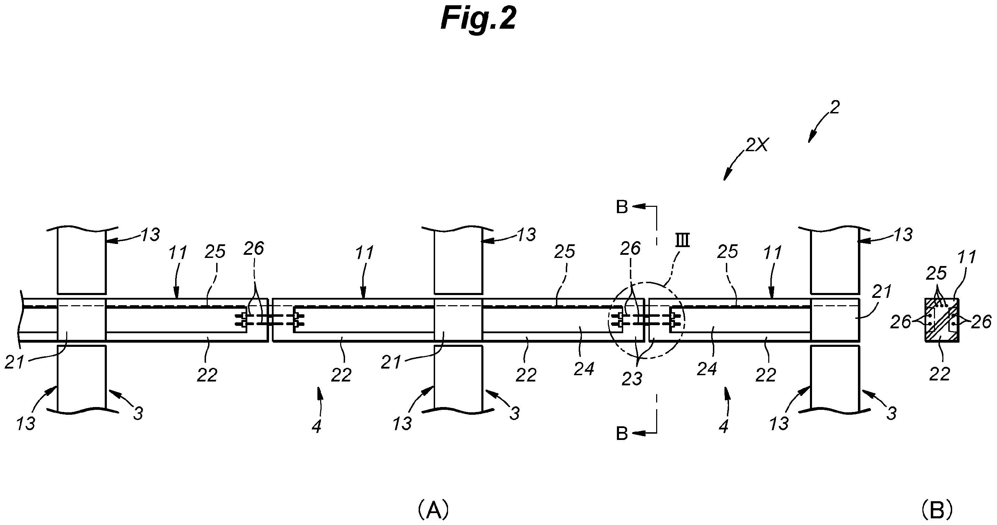

Figure 2 includes (A) a side view (a view in the direction of arrow II in Figure 1) and (B) a sectional view (a B-B cross section in A) of the first beams 4. As shown in Figure 2, each first beam main body 22 of each first beam member 11 has a rectangular cross-sectional shape at a tip end portion 23 thereof, and has an I-shaped cross section having recessed side surfaces at a vertically intermediate part in the rest portion (hereinafter referred to as a general portion 24) thereof. In other words, the tip end portion 23 of each first beam main body 22 forms, at at least a part thereof in the up-down direction, a widened portion that is widened relative to the general portion 24. Due to this widened portion, an end part of the tip end portion 23 on the side of the general portion 24 is formed with shoulder surfaces facing the joint part 21. In another example, an end part of the general portion 24 of each first beam main body 22 on the side of the joint part 21 may be provided with a base end portion having a cross-sectional shape similar to that of the tip end portion 23.

In an upper portion of each first beam member 11, multiple first PC members 25 extending in the X direction are disposed over the entire length of the first beam member 11. Each first PC member 25 may be any of a PC steel wire, a PC steel rod, a PC steel strand, an FRP rod, etc., and in the present embodiment, consists of a PC steel strand. The first PC members 25 are disposed inside each first beam member 11 by a pre-tension method when the first beam member 11 is manufactured at a factory to introduce prestress in the member axis direction into the first beam member 11. Namely, each first beam member 11 is made of precast PC. Two first beam members 11 that are disposed to be continuous in the X direction are joined to each other by multiple first unbonded tendons 26. Thereby, the first beam main bodies 22 of the two first beam members 11 are connected in the X direction, and the first beam main bodies 22 of the two first beam members 11 configure the entirety of the first beam 4. The joining structure provided by the first unbonded tendons 26 will be described in detail later.

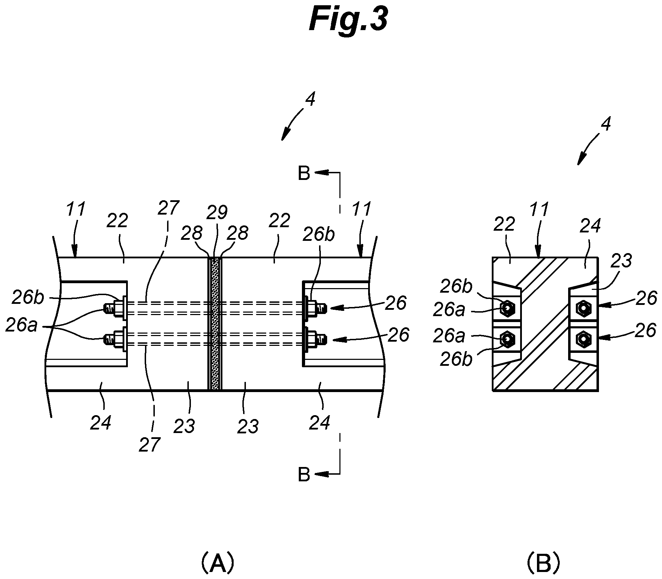

Figure 3 includes (A) a side view and (B) a sectional view (a B-B cross section in A) of a part III in Figure 2. With reference to Figure 3, the joining structure of the first beam members 11 will be described in detail. In the tip end portion 23 (specifically, the widened part) of each first beam member 11, multiple first sheaths 27 are embedded to penetrate the tip end portion 23 in the X direction. Further, the end surface of the tip end portion 23 of each first beam member 11 is provided with a cover plate 28 as a cover member. The cover plate 28 may be made of metal or resin, for example, and may be integrally attached to the first beam member 11 or may be detachably provided. Alternatively, a cover sheet may be provided as the cover member. Parts of the cover plate 28 corresponding to the first sheaths 27 are formed with through holes. Two first beam members 11 disposed to be continuous in the X direction are arranged such that the cover plates 28 thereof oppose each other in positions where they move toward and away from each other. The gap between the two first beam members 11 (between the cover plates 28) is filled with joint filler 29 consisting of hardening filler such as non-shrink mortar or resin mortar. To enhance the adhesion of the joint filler 29, the surface of the cover plate 28 on the side of the joint filler is preferably provided with unevenness. Between each pair of first sheaths 27, a connecting sheath not shown in the drawings is provided to prevent the joint filler 29 from entering the inside of the first sheaths 27.

Two first beam members 11 continuous in the X direction are pressure joined (pressure bonded) to each other by multiple first unbonded tendons 26 inserted to penetrate the first sheaths 27 of them. Each first unbonded tendon 26 includes a first tendon 26a inserted in the first sheaths 27 and a pair of first anchoring metal members 26b contacting against the shoulder surfaces of the tip end portions 23 of the respective first beam members 11 to maintain the tension of the first tendon 26a by the reaction force from the shoulder surfaces. In the present embodiment, the both ends of each first tendon 26a are formed with male threads, and each first anchoring metal member 26b includes a holed steel plate provided on the shoulder surface of the first beam member 11 and a nut formed with female threads. By screwing the nuts of the first anchoring metal members 26b onto the male threads of each first tendon 26a and tightening them with a predetermined torque, a desired tension is applied to the first tendon 26a, and the two first beam members 11, 11 are pressure joined to each other.

No filler is filled inside and between these first sheaths 27, and the first unbonded tendons 26 can be removed by loosening the nuts of the first anchoring metal members 26b. As described above, the pair of first beam members 11, 11 adjacent to each other in the X direction are pressure joined to each other by the first unbonded tendons 26 at an intermediate portion of each first beam 4 in the longitudinal direction, and thus, grout injection work for connecting the two first beam members 11, 11 is unnecessary. Also, the two first beam members 11, 11 can be separated again after assembly by removing the first unbonded tendons 26.

As described above, the end surface of each first beam member 11 in the X direction is provided with the cover plate 28, and the gap between the cover plates 28 of each pair of first beam members 11, 11 adjacent to each other in the X direction is filled with the hardening joint filler 29. Therefore, it is possible to prevent fracture of the first beam members 11 due to local stress generated by direct pressure joint between the joint end surfaces of the first beam members 11. Further, with this configuration, the manufacturing error of the first beam members 11 and the construction error during assembly can be absorbed by the joint filler 29, whereby the manufacturing cost and the construction cost can be reduced.

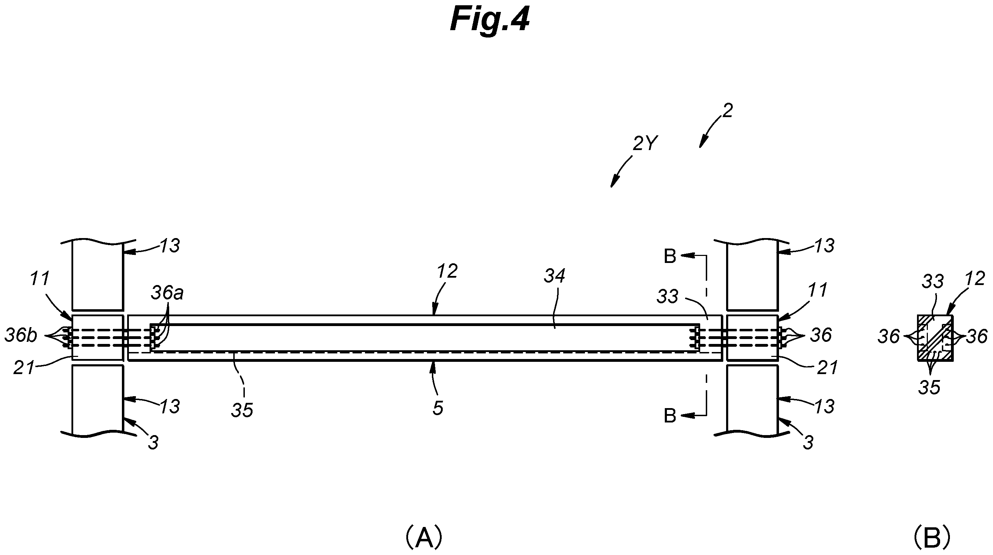

Figure 4 includes (A) a side view (a view in the direction of arrow IV in Figure 1) and (B) a sectional view (a B-B cross section in A) of a second beam 5. As shown in Figure 4, each second beam member 12 has a rectangular cross-sectional shape at each tip end portion 33 thereof in the longitudinal direction (Y direction), and has an I-shaped cross section having recessed side surfaces at a vertically intermediate part in the rest portion (hereinafter referred to as a general portion 34). In other words, each of the tip end portions 33 of each second beam member 12 forms, at at least a part thereof in the up-down direction, a widened portion that is widened relative to the general portion 34. Due to this widening of each tip end portion 33, an end part of each tip end portion 33 on the side of the general portion 34 is formed with shoulder surfaces facing in the direction away from the end surface.

In a lower portion of each second beam member 12, multiple second PC members 35 extending in the Y direction are disposed over the entire length of the second beam member 12. Each second PC member 35 may be any of a PC steel wire, a PC steel rod, a PC steel strand, an FRP rod, etc., and in the present embodiment, consists of a PC steel strand. The second PC members 35 are disposed inside each second beam member 12 by a pre-tension method when the second beam member 12 is manufactured at a factory to introduce prestress in the member axis direction into the second beam member 12. Namely, each second beam member 12 is made of precast PC. Each second beam member 12 is joined to the joint parts 21 of two first beam members 11 disposed to be spaced from each other in the Y direction, by multiple second unbonded tendons 36.

The joining structure for joining each second beam member 12 to the joint part 21 of the first beam member 11 by the second unbonded tendons 36 is similar to the joining structure described above with reference to Figure 3, and thus, detailed description thereof is omitted. Each second unbonded tendon 36 includes a second tendon 36a inserted into a pair of second sheaths. Further, each second unbonded tendon 36 includes a pair of second anchoring metal members 36b respectively contacting against the shoulder surface of the tip end portion 33 of the second beam member 12 and the outer side surface of the joint part 21 of the first beam member 11 in the Y direction to maintain the tension of the second tendon 36a by the reaction force from them.

No filler is filled inside and between these second sheaths, and the second unbonded tendons 36 can be removed by loosening the nuts of the second anchoring metal members 36b. As described above, each second beam member 12 is pressure joined to the joint parts 21 of the pair of first beam members 11 at the both end portions thereof in the longitudinal direction by the second unbonded tendons 36, and thus, grout injection work for the connection of each second beam member 12 is unnecessary. Also, each second beam member 12 can be separated again after assembly by removing the second unbonded tendons 36 at the both end portions thereof.

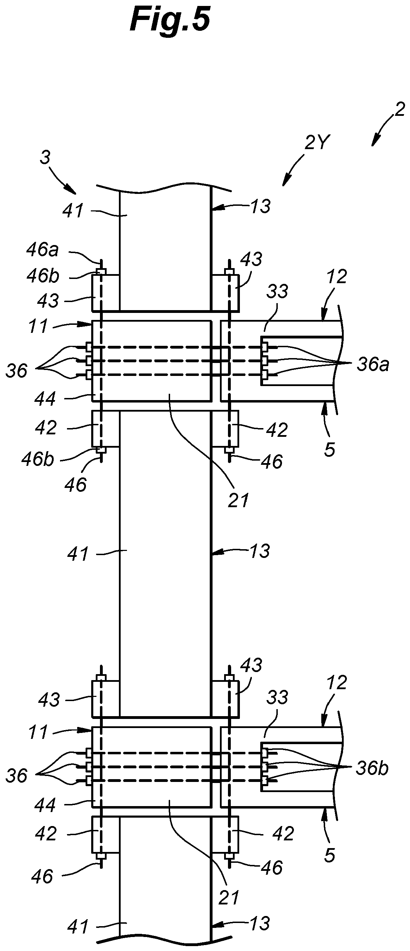

Figure 5 is a side view showing the connection structure for the pillars 3 (a view in the direction of arrow IV in Figure 1). Note that an upper portion and a lower portion in Figure 5 each show the same part as a left portion in Figure 4. However, note that, since Figure 4 is an explanatory diagram of the connection structure for the second beam members 12, the connection structure for the pillars 3 shown in Figure 5 is omitted in Figure 4.

As shown in Figure 5, each pillar member 13 includes a pillar main body 41 having a rectangular constant cross section, inner and outer upper end protrusions 42 that protrude in the Y direction from upper parts of the side surfaces facing in the Y direction, and inner and outer lower end protrusions 43 that protrude in the Y direction from lower parts of the side surfaces facing in the Y direction. The upper end protrusions 42 and the lower end protrusions 43 are each a widened portion that is widened at the upper end or the lower end of the pillar member 13 relative to the rest portion of the pillar main body 41. Each upper end protrusion 42 forms a downward facing shoulder surface at the lower end thereof, and each lower end protrusion 43 forms an upward facing shoulder surface at the upper end thereof.

Each first beam member 11 has a joint protrusion 44 that protrudes from the joint part 21 outward in the Y direction. The joint protrusion 44 is designed to have the same height dimension as the joint part 21 and has a shape corresponding to the upper end protrusion 42 and the lower end protrusion 43.

Each first beam member 11 is placed on the pillar member 13 of the relevant layer via the joint filler 29 (see Figure 3) such that the joint part 21 is continuous with the pillar main body 41 of the pillar member 13. On the joint part 21 of the first beam member 11, the pillar member 13 of the upper layer is placed so as to be continuous with it via the joint filler 29 (see Figure 3). The end portion of each second beam member 12 is placed on the inner upper end protrusion 42 of the pillar member 13 on the lower side via the joint filler 29, and on the end portion of the second beam member 12, the inner lower end protrusion 43 of the pillar member 13 on the upper side is placed via the joint filler 29. On the outer upper end protrusion 42 of the pillar member 13 on the lower side, the joint protrusion 44 of the first beam member 11 is placed via the joint filler 29, and on the joint protrusion 44, the inner lower end protrusion 43 of the pillar member 13 on the upper side is placed via the joint filler 29. In another example, the joint filler 29 does not have to be provided.

Two pillar members 13 adjacent to each other in the up-down direction via the first beam member 11 are joined to the joint part 21 of the first beam member 11 by inner and outer third unbonded tendons 46 that are provided to penetrate the upper end protrusion 42 and the lower end protrusion 43 in the up-down direction. The inner third unbonded tendons 46 are provided to further penetrate the end portion of the second beam member 12 in the up-down direction, and upper and lower end portions thereof are respectively anchored to the upper end protrusion 42 and the lower end protrusion 43. The outer third unbonded tendons 46 are provided to further penetrate the joint protrusion 44 in the up-down direction, and upper and lower end portions thereof are respectively anchored to the upper end protrusion 42 and the lower end protrusion 43.

The joining structure for joining the two upper and lower pillar members 13 to the joint part 21 of the first beam member 11 by the third unbonded tendons 46 is similar to the joining structure described above with reference to Figure 3, and thus, detailed description thereof is omitted. The third unbonded tendons 46 can be removed by loosening the nuts of the third anchoring metal members 46b. As described above, each pair of pillar members 13, 13 adjacent to each other in the up-down direction via the joint part 21 of the first beam member 11 are pressure joined to the joint part 21 of the first beam member 11 by the third unbonded tendons 46, and thus, grout injection work for connecting the pillar members 13 is also unnecessary. Further, the pillar members 13 can be separated from the first beam member 11 after assembly by removing the third unbonded tendons 46.

Each of the first tendons 26a, the second tendons 36a, and the third tendons 46a described above may be any of a PC steel wire, a PC steel rod, a PC steel strand, an FRP rod, etc., and in the present embodiment, consists of a PC steel wire.

As described above, since the first beam members 11, the second beam members 12, and the pillar members 13 are assembled together by pressure joint provided by the first unbonded tendons 26, the second unbonded tendons 36, and the third unbonded tendons 46, the frame 2 does not require grout injection work during assembly. This reduces the number of work steps during assembly, so that the assembly work becomes easy. Further, by removing these unbonded tendons (26, 36, 46), the beam members can be separated again after assembling the frame 2, and thus, there is no need to destroy these members (11, 12, 13) when dismantling the frame 2, and the dismantling work also becomes easy. Further, when dismantling, there is almost no noise, vibration, and dust generation, and no specialized heavy machinery or the like is required. Moreover, it is possible to reuse these members (11, 12, 13).

Also, the inner third unbonded tendons 46 penetrate the second beam member 12 in the up-down direction and make the upper end protrusion 42 of the pillar member 13 on the lower side and the lower end protrusion 43 of the pillar member 13 on the upper side pressure joined to the second beam member 12. Thereby, two pillar members 13, 13 adjacent to each other in the up-down direction are pressure joined to the joint part 21 of the first beam member 11 by the common inner third unbonded tendons 46 that penetrate the second beam member 12, and the assembly work and dismantling work related to the connection of the pillar members 13 become easy.

Further, the outer third unbonded tendons 46 penetrate the joint protrusion 44 in the up-down direction and make the upper end protrusion 42 of the pillar member 13 on the lower side and the lower end protrusion 43 of the pillar member 13 on the upper side pressure joined to the joint protrusion 44. Thereby, the tension of the outer third unbonded tendons 46 is directly transmitted from the upper end protrusion 42 and the lower end protrusion 43 to the joint protrusion 44 of the first beam member 11. Thus, compared to the case where there is a space between the upper end protrusion 42 and the lower end protrusion 43, the upper end protrusion 42 and the lower end protrusion 43 can have a simple structure with a small shear strength.

Next, an example of use of the frame 2 configured as above will be described. Figure 6 is a perspective view of a building 1 under construction, which shows an example of use of the frame 2 according to the present invention. The building 1 includes the frame 2 having the above-described configuration and multiple interior units 50 arranged inside the frame 2. In the example shown in the drawing, a floor member 51 made of reinforced concrete is placed on the first beams 4 and the second beams 5 of the frame 2, and the interior units 50 are placed on the floor member 51. In another example, the interior units 50 may be directly placed on the first beams 4 and the second beams 5.

In this building 1, the multiple first beam members 11, the multiple second beam members 12, and the multiple pillar members 13 of the frame 2 are configured to be separable from each other.

Each interior unit 50 is configured such that it can be assembled to and removed from the frame 2. Specifically, as shown in the drawing, the interior unit 50 is lifted by a crane and is carried to a predetermined position in the frame 2 or carried out from the predetermined position when the first beams 4 and the second beams 5 above it are not present. Each interior unit 50 has a height dimension greater than the height from the upper surfaces of the first beam 4 and the second beam 5 adjacent thereto downwardly to the lower surfaces of the first beam 4 and the second beam 5 adjacent thereto upwardly. Parts of each interior unit 50 corresponding to the first beam 4 and the second beam 5 adjacent thereto upwardly are cut out. Due to the construction of the first beam 4 and the second beam 5 adjacent thereto upwardly, each interior unit 50 is fixed to the predetermined position by the frame 2. In another embodiment, the interior units 50 may be fixed to the frame 2 by fixing members.

Alternatively, each interior unit 50 may be installed into the inside of the frame 2 in a state in which the first beam 4 and the second beam 5 adjacent thereto upwardly have been constructed, by being slid on a support base (not shown in the drawing) disposed to the side of the frame 2. Similarly, each interior unit 50 may be taken out from the inside of the frame 2 by being slid on the support base disposed to the side thereof. In this case, each interior unit 50 is preferably fixed to the frame 2 by using a fixing member.

In this way, the multiple precast members are configured to be separable from each other, and the interior units 50 are configured such that they can be assembled to and removed from the frame 2. Therefore, assembly and dismantling of the frame 2 as well as assembly and removal of the interior units 50 to and from the frame 2 are easy. Thus, the building 1 can be favorably used in such cases as when the building 1 is used as a time-limited architectural structure or when one or more sections of the frame 2 of the building 1 are to be rented.

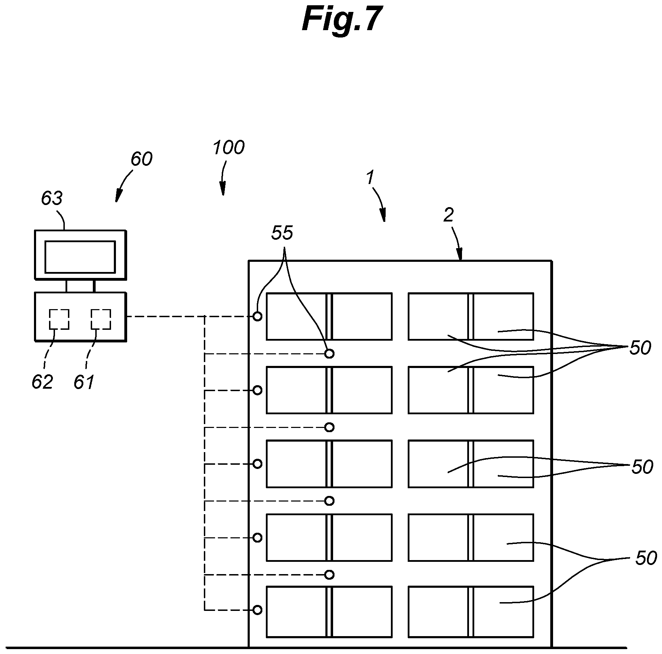

Figure 7 is a configuration diagram of a reuse evaluation system 100 according to the present invention. The reuse evaluation system 100 includes multiple sensors 55 and a monitoring device 60. The sensors 55 are attached to multiple precast members including the first beam members 11, the second beam members 12, and the pillar members 13 (see Figure 1) to measure a predetermined physical quantity P. The predetermined physical quantity P preferably includes at least one of acceleration and distortion, for example, and may also include temperature, humidity, etc.

The monitoring device 60 consists of a computer provided with a processing unit 61 (a processor such as a CPU, an MPU, etc.) and a storage device 62 (a memory such as a ROM, a RAM, etc.) and configured to execute various processes necessary for member usability determination. That the monitoring device 60 is configured to execute various processes means that the processing unit 61 constituting the monitoring device 60 is programmed to read out necessary data and application software from the storage device 62 and to execute predetermined computational processes according to the software.

The processing unit 61 of the monitoring device 60 writes and stores the detection results of the sensors 55 in the storage device 62. The monitoring device 60 is provided, in the storage device 62, with a database in which various data of each precast member (11 to 13) is stored. Preferably, the database includes the identification number, member type, dimension, specification, manufacturing factory, manufacturing date, use history, and storage history of each precast member, as well as log of the detection data of the sensor used for each precast member.

The monitoring device 60 monitors the physical quantity P of each precast member (11 to 13) during use of the building 1, in which the processing unit 61 determines the continued usability and reusability of each precast member based on preset determination criteria. In other words, the monitoring device 60 is configured to execute a determination process including the determination of whether to permit continued use and the determination of whether to permit reuse of each precast member based on the detection results of the sensors 55. The determination process will be described in relation to the later-described reuse method for the precast members.

Further, the monitoring device 60 is provided with a display 63 and causes the physical quantity P that is being monitored and the determination result to be displayed on the display 63. Alternatively, instead of being provided with the display 63, the monitoring device 60 may be provided with a wireless or wired information transmission device and may transmit the physical quantity P that is being monitored and the determination result to a terminal that can be accessed by the manager.

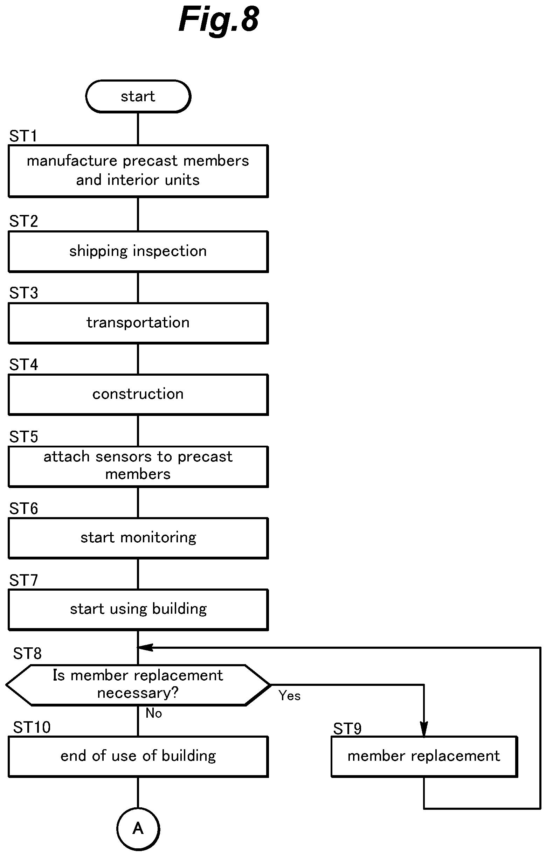

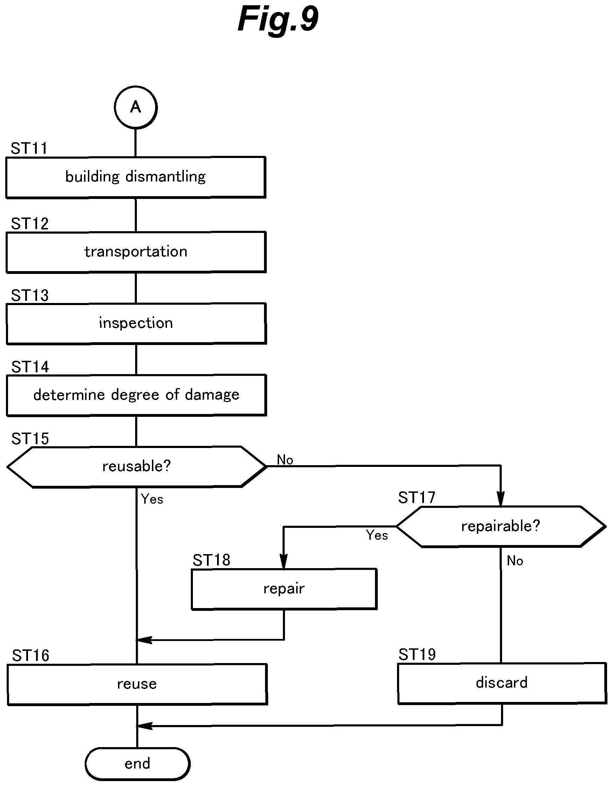

Next, a reuse method for the precast members and the building 1 according to the present invention will be described with reference to Figure 8 and Figure 9.

Figures 8 and 9 are flowcharts of the reuse method for the precast members and the building 1, wherein Figure 8 shows during construction and use, while Figure 9 shows when dismantled. As shown in Figure 8, the precast members and the interior units 50 are manufactured under predetermined quality management at a precast factory and an interior unit factory (step ST1). The precast members and the interior units 50 that have been manufactured are subjected to shipping inspection at the factory (step ST2), and only those that have passed the shipping inspection are shipped and transported to predetermined construction sites (step ST3). Thereafter, the precast members and the interior units 50 are used to construct the building 1 on site (step ST4).

When the building 1 is constructed, the sensors 55 are attached to the precast members (step ST5) and are connected to the monitoring device 60 by the worker. Alternatively, the sensors 55 may have been attached to the precast members at the time of shipment from the factory, so that only the work of connecting the sensors 55 to the monitoring device 60 may be performed on site when constructing the building 1. The sensors 55 may be attached to only representative parts where deterioration factors that are expected in advance can be grasped. Thereafter, the monitoring of the physical quantity P of each precast member by the monitoring device 60 is started (step ST6). Also, the use of the building 1 is started (step ST7). During use of the building 1, the monitoring device 60 stores the physical quantity P of each precast member in the storage device 62 and monitors the physical quantity P. The monitoring by the monitoring device 60 is performed continuously or intermittently during use of the building 1.

During use of the building 1, predetermined sections of the building 1 are provided for limited time use. For example, it may be assumed that the frame 2 of the building 1 is possessed by a leasing company. The business operators to which the frame 2 may be leased may include real estate developers and sole proprietors. The business operator who has taken the lease of the frame 2 of the building 1 may further rent the sections to various business operators, such as housing companies, office rental companies, and hotel operators, with time limit. Note that the leasing company may be the business entity that directly conducts businesses such as office rental business and hotel business by using the building 1.

The monitoring device 60 repeatedly performs determination of whether to permit continued use of each precast member during use of the building 1. Specifically, the monitoring device 60 determines that member replacement is necessary (step ST8) when the physical quantity P of any precast member exceeds a predetermined second reference value Pth2. The cycle for determining whether to permit the use may be arbitrary; for example, the determination may be made once in several months or after occurrence of an event such as an earthquake. In the case where it is determined that member replacement is necessary (ST8: Yes), the monitoring device 60 displays the determination result that member replacement is necessary on the display 63. Thereby, the manager can recognize that replacement of precast members is necessary, and accordingly, replacement work of the precast members that need replacement is performed (step ST9). After the replacement of precast members, the physical quantity P of each precast member is continued to be monitored.

When the use period of the building 1 expires without the determination that member replacement is necessary (ST8: No), the use of the building 1 ends (step ST10). As shown in Figure 9, when the use of the building 1 ends, the building 1 is dismantled (step ST11). After the building 1 is dismantled, each of the precast members and the interior units 50 is transported from the dismantling site to the inspection area (step ST12). The inspection area may be any place where facilities for performing prescribed inspection or check-up of the precast members or the interior units 50 are provided, and for example, may be a precast factory, a prefab factory, a storage warehouse for storing them, or the like.

At the inspection area, the prescribed inspection of the precast members is performed by the worker and an inspection device (step ST13). Also, the check-up of the interior units 50 is performed by the worker or a check-up device (step ST13). After the inspection, the degree of damage of each precast member is determined based on the detection results of the sensors 55 and the result of the prescribed inspection (step ST14). Also, after the check-up, the degree of damage of each interior unit 50 is determined based on the check-up result (step ST14).

The degree of damage of each precast member is decided by a computer according to predetermined determination criteria by comprehensively assessing the monitoring results by the sensors 55 and the inspection result. The computer includes the monitoring device 60. For example, the monitoring device 60 determines whether the physical quantity P detected by each sensor 55 is within a predetermined first reference value Pth1, and determines that the precast member is reusable when the physical quantity P is within the first reference value Pth1. Note that the first reference value Pth1 is a smaller value than the second reference value Pth2, which is used as a determination criterion for the necessity of member replacement. Depending on the degree of damage, each precast member is classified as reusable as is, reuseable by repair, or not repairable (to be discarded). In the determination of the degree of damage, the result of visual inspection of the appearance of each precast member by the worker inputted to the computer may be taken into account.

The degree of damage of each interior unit 50 is determined by the worker or the computer according to predetermined determination criteria. Depending on the degree of damage, each interior unit 50 also is classified as reusable as is, reusable by repair, or not repairable (to be discarded). In the determination of the degree of damage, the check-up result for each interior unit 50 by the worker inputted to the computer may be taken into account.

The precast members and the interior units 50 are each determined whether they are reusable (step ST15), and when determined to be reusable (ST15: Yes), they are each reused (step ST16). On the other hand, when determined to be not reusable (ST15: No), the precast members and the interior units 50 are each determined whether they are repairable (step ST17). When the degree of damage is low and the precast members or the interior units 50 are repairable for reuse (ST17: Yes), the precast members or the interior units 50 are repaired (step ST18) and reused (step ST16). On the other hand, when the degree of damage is high and the precast members or the interior units 50 are not repairable for reuse (ST17: No), the precast members or the interior units 50 are dismantled and discarded without being reused (step ST19).

As described above, since the monitoring device 60 is configured to determine the reusability of the precast members based on the detection results of the sensors 55, the reusability of the precast members used in the building 1 is determined, and the quality of the precast members is ensured. Therefore, it is possible to construct a safe building 1 by reusing the precast members.

In the present embodiment, the monitoring device 60 determines, in step ST14, whether the physical quantity P detected by each sensor 55 is within the predetermined first reference value Pth1, and determines that each precast member is reusable when the physical quantity P is within the first reference value Pth1. Therefore, whether each precast member is reusable can be determined objectively.

In step ST8, the monitoring device 60 determines that member replacement is necessary when the physical quantity P of any precast member exceeds the second reference value Pth2 that is greater than the first reference value Pth1 during use of the building 1. Namely, even during use of the building 1, any precast member becoming a state not suitable for use is detected. Therefore, the safety of the building 1 in which the precast members are used is improved.

In addition, in this precast member reuse method, from step ST6 onward, the physical quantity P of the precast members detected by the sensors 55 is monitored during use of the building 1. When the building 1 is dismantled, the reusability of each precast member is determined in step ST14 based on the detection results of the sensors 55. Thereby, it is possible to ensure the quality of the precast members used in the building 1. Then, the precast members determined to be reusable are reused in another building 1 to be built in step ST16, whereby it is possible to construct a safe building 1 by reusing the precast members.

When the sensors 55 are attached to the precast members in step ST5, the sensors 55 are also attached to the first beam members 11 and the second beam members 12. Then, when the building 1 is dismantled, the reusability of each of these first beam members 11 and second beam members 12 is determined in the determination of the reusability of each precast member in step ST14. Thereby, the reusability of the beam members, which are susceptible to damage due to earthquakes is determined, and the quality of the beam members is ensured.

In the present embodiment, the first beam members 11 and the second beam members 12 determined to be reusable are further inspected visually in step ST14 to determine whether there is an abnormality in appearance, and only when there is no abnormality in appearance, they are determined to be reusable. Thereby, the first beam members 11 and the second beam members 12 having an abnormality in appearance that cannot be recognized from the physical quantity P can be prevented from being reused. Thus, the building 1 constructed by reusing the beam members can be made safer.

In the present embodiment, after the building 1 is dismantled in step ST11, prescribed inspection is performed on the precast members in step ST13, and the degree of damage of each precast member is determined in step ST14 based on the detection results of the sensors 55 and the result of the prescribed inspection. Then, in step ST18, depending on the degree of damage, the precast members are repaired to be reusable. In this way, due to the prescribed inspection performed after the building 1 is dismantled, the precast members can be repaired to be reusable. Therefore, the quality of the precast members is reliably ensured, and in addition, the number of precast members that can be reuse increases. Thus, the amount of CO₂ emission due to manufacture of the precast members is reduced.

In the reuse method for the building 1 according to the present embodiment, matters related to whether to permit reuse of the interior units 50 are checked up in step ST13, and the precast members and the interior units 50 are reused in another building 1 to be built in step ST16. Therefore, the quality of the precast members is ensured more reliably, the reliability of the frame 2 of the building 1 using the precast members improves, and the quality of the interior units 50 disposed inside the frame 2 is ensured.

Also, in the reuse method for the building 1 according to the present embodiment, when the building 1 is used in step ST7, predetermined sections of the building 1 are provided for limited time use. In this way, since the use of the predetermined sections is time limited, it is possible to deal with replacement of change of use of the members in these sections based on a plan, whereby it is possible to more reliably ensure the quality of the precast members and to enhance the reliability of the frame 2 of the building 1 that uses the precast members.

As described above, in the building 1 of the embodiment, the frame 2 can be repeatedly used, and the interior units 50 disposed inside the frame 2 can be appropriately changed as necessary. Since the use of each section is time limited, repair of the frame 2 can be performed in a planned manner. Therefore, various losses (for example, equipment, workforce, amount of CO₂ emission, etc.) associated with building construction for real estate business can be reduced, and limited resources can be efficiently utilized. Further, through quality assurance of the building members, it is possible to contribute to improvement of safety of the building 1.

### << Second Embodiment >>

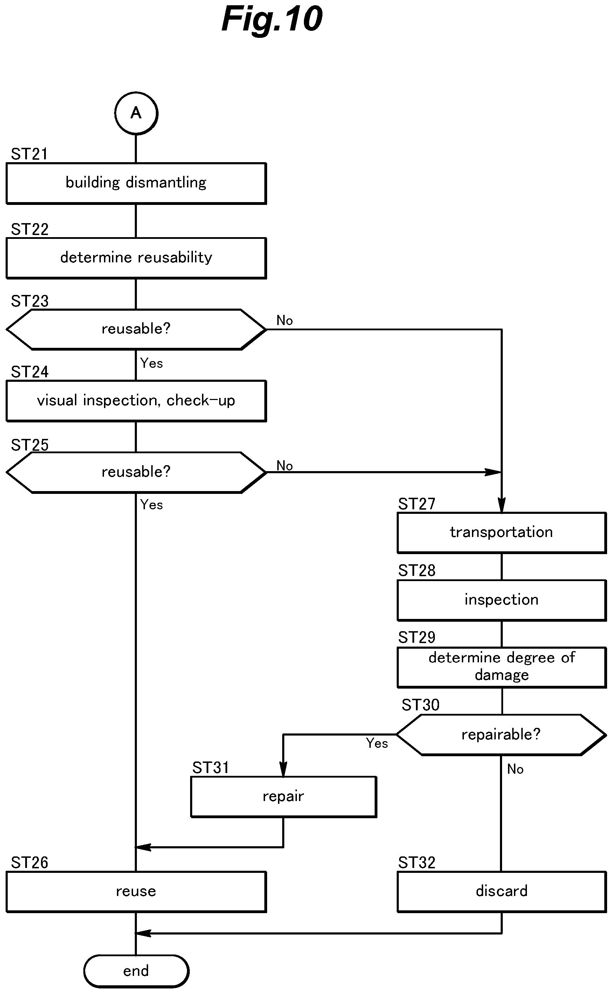

Figure 10 is a flowchart of the reuse method for the precast members and the building 1 when dismantled according to the second embodiment, and corresponds to Figure 9. As shown in Figure 10, in the present embodiment, when the building 1 is dismantled in step ST21, the monitoring device 60 performs the determination of whether to permit reuse of each precast member to determine the reusability of each precast member (step ST22). Specifically, the monitoring device 60 determines whether the physical quantity P detected by each sensor 55 is within the predetermined first reference value Pth1, and when the physical quantity P is within the first reference value Pth1, determines that the precast member is reusable.

When it is determined to be reusable by the monitoring device 60 (step ST23: Yes), visual inspection of the appearance of the precast members and check-up of the interior units 50 are performed by the worker (step ST24). When determined to be reusable by the worker in the appearance inspection also (ST25: Yes), each precast member is reused (step ST26). Also, when determined to be reusable by the worker in the check-up (ST25: Yes), each interior unit 50 is reused (step ST26).

On the other hand, when determined to be not reusable by the monitoring device 60 (ST23: No), or when determined not reusable by the worker (ST25: No), each of the precast members and the interior units 50 is transported from the dismantling site to the inspection area (step ST27). the inspection area may be any place where facilities for performing prescribed inspection or check-up of the precast members or the interior units 50 are provided, and for example, may be a precast factory, a prefab factory, a storage warehouse for storing them, or the like.

At the inspection area, the prescribed inspection of the precast members is performed by the worker (step ST28). Also, the check-up of the interior units 50 is performed by the worker or a check-up device (step ST28). After the inspection, the degree of damage of each precast member is determined based on the detection results of the sensors 55 and the result of the prescribed inspection (step ST29). Also, after the check-up, the degree of damage of each interior unit 50 is determined based on the check-up result (step ST29). The degree of damage of each precast member and the degree of damage of each interior unit 50 are decided by the worker or by the computer according to predetermined determination criteria. Note that the computer may be the monitoring device 60.

When the degree of damage is low and the precast members or the interior units 50 are repairable for reuse (step ST30: Yes), the precast members or the interior units 50 are repaired (step ST31) and reused (step ST26). On the other hand, when the **degree** of damage is high and the precast members or the interior units 50 are not repairable for reuse (ST30: No), the precast members or the interior units 50 are dismantled and discarded without being reused (step ST32).

Even when the reuse method for the precast members and the building 1 is executed in this way, similar effects to those of the first embodiment can be obtained. Since the effects are similar to those of the first embodiment, description thereof is omitted.

### << Third Embodiment >>

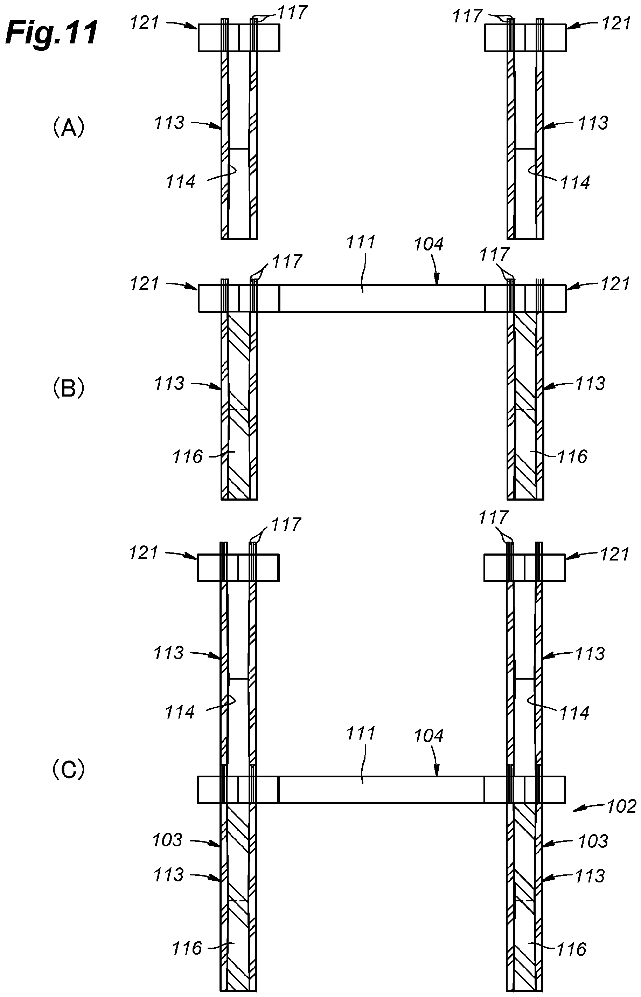

Next, the third embodiment of the present invention will be described with reference to Figure 11. Note that the elements same as or similar to those of the first embodiment are denoted by the same reference numbers or reference numbers added with 100, and the redundant description will be omitted.

As shown in Figure 11(A), in the frame 102 of the present embodiment, the pillar members 113 made of precast concrete consisting of reinforced concrete and constituting the pillars 3 each have main rebars 117 and a joint part 121 at an upper portion thereof. Also, each pillar member 113 has a hollow structure internally defining a hollow part 114.

As shown in Figure 11(A), the worker disposes the pillar members 113 in predetermined positions with a crane or the like. As shown in Figure 11(B), the worker casts cast-in-place concrete 116 in the hollow parts 114 of the pillar members 113 thereby to form cast-in-place concrete parts. Further, the worker disposes a beam member 111 configuring a part of a beam 104 between two joint parts 121, and joins the beam member 111 to the joint parts 121 of the pillar member 113 with unbonded tendons (not shown in the drawings).

As shown in Figure 11(C), to construct pillars 103 located one layer above the pillar members 113 that have been constructed, the worker dispose, with the crane or the like, new pillar members 113 in predetermined positions above the pillar members 113 that have been constructed. At this time, the worker inserts the upper end portions of the main rebars 117 of the pillar members 113 that have been constructed into the sleeves (not shown in the drawings) embedded in the lower ends of the new pillar members 113. After performing position adjustment of the new pillar members 113, the worker injects joint grout between the lower surface of each new pillar member 113 and each of the upper surface of the cast-in-place concrete 116 and the upper surface of the joint part 121 that are directly below it, and injects coupler grout into the sleeves.

In the present embodiment, each pillar member 113 has a hollow structure provided with the hollow part 114, and is lighter than when it has a solid structure. Therefore, the number of pillar members that can be transported by one truck increases and each pillar member can be lifted with a relatively small crane. Particularly, in the case where the pillar members 113 are for a large-scale logistics facility, if each pillar member 113 has a solid structure, only one pillar member can be loaded on a single truck, but in the present embodiment, two pillar members 113 can be loaded on a single truck, and thus, the transportation efficiency improves. Also, since they can be lifted by a small crane, they are advantageous for construction in urban areas.

Note that in the present embodiment, the pillar members 113 are joined to each other by the sleeves and the cast-in-place concrete 116, and thus, the members of each pillar 103 cannot be reused when the building 1 is dismantled. On the other hand, since the beam members 111 are joined to the pillar members 113 by unbonded tendons, they can be separated from the pillar members 113 and reused by releasing the connection by the unbonded tendons.

Concrete embodiments have been described in the foregoing, but the present invention can be modified in various ways without being limited by the above embodiments and modifications. For example, the structure, joining structure, etc. of the frames 2, 102 are not limited to the above examples. For example, parts of the frames 2, 102 may include members not containing concrete, such as steel frame members. Also, each precast member is only required to contain precast concrete, and is not limited to the above-described member that consists of reinforced concrete. Besides, the concrete structure, arrangement, number, or material of each member or part, as well as order of works/steps, method, etc. may be appropriately changed without departing from the spirit of the present invention. Further, parts or all of the configurations of the above embodiments may be combined to each other. Also, not all of the components shown in the foregoing embodiments are necessarily indispensable and they may be selectively adopted as appropriate.

### LIST OF REFERENCE NUMERALS

- 1:: building
- 2:: frame
- 2X:: X-direction frame
- 2Y:: Y-direction frame
- 3:: pillar
- 4:: first beam
- 5:: second beam
- 11:: first beam member (the precast member)
- 12:: second beam member (the precast member)
- 13:: pillar member (the precast member)
- 26:: first unbonded tendon
- 36:: second unbonded tendon
- 46:: third unbonded tendon
- 50:: interior unit
- 55:: sensor
- 60:: monitoring device
- 61:: processing unit
- 62:: storage device
- 100:: reuse evaluation system
- 102:: frame
- 103:: pillar
- 104:: beam
- 111:: beam member (precast member)
- 113:: pillar member (precast member)
- 114:: hollow part
- 116:: concrete

## Claims

1. A reuse method for precast members of a building, wherein the precast members configure a frame of the building having a rigid frame structure and contain precast concrete, the reuse method comprising:
a step of, when constructing the building provided with the multiple precast members including multiple pillar members and multiple beam members, attaching a sensor for detecting a predetermined physical quantity to at least one of the precast members, the at least one of the precast members being joined to another one of the precast members by an unbonded tendon;
a step of monitoring the physical quantity of the precast member detected by the sensor during use of the building;
a step of, when dismantling the building, determining reusability of the precast member based on a detection result of the sensor; and
a step of reusing the precast member determined to be reusable in another building to be constructed.

2. The reuse method for precast members of a building according to claim 1, wherein, in the step of attaching the sensor, the sensor is attached to the beam member when the building in which the beam members are joined to the pillar members by the unbonded tendons is constructed, and
in the step of determining the reusability of the precast member, reusability of the beam member is determined when dismantling the building.

3. The reuse method for precast members of a building according to claim 2, wherein the pillar members each have a hollow structure, and when the building is constructed, cast-in-place concrete is casted in a hollow part of each pillar member after the pillar members are erected at predetermined positions.

4. The reuse method for precast members of a building according to any one of claims 1 to 3, wherein the reuse method further comprises a step of determining, by visual inspection, whether there is an abnormality in appearance on the beam member determined to be reusable, and the beam member is determined to be reusable only when there is no abnormality in appearance.

5. The reuse method for precast members of a building according to any one of claims 1 to 3, wherein the reuse method further comprises:
a step of performing, after the building is dismantled, prescribed inspection on the precast member and determining a degree of damage of the precast member based on the detection result of the sensor and a result of the prescribed inspection; and
a step of repairing the precast member depending on the degree of damage to bring the precast member into a reusable state.

6. A reuse method for a building including precast members that configure a frame having a rigid frame structure and that contain precast concrete and multiple interior units disposed in the frame, the reuse method comprising:
a step of, when constructing the frame provided with multiple precast members including multiple pillar members and multiple beam members, attaching a sensor for detecting a predetermined physical quantity to at least one of the precast members, the at least one of the precast members being joined to another one of the precast members by an unbonded tendon;
a step of, during use of the building, monitoring the physical quantity of the precast member detected by the sensor;
a step of performing prescribed inspection on the precast member after dismantling the building and determining a degree of damage of the precast member based on a detection result of the sensor and a result of the prescribed inspection;
a step of repairing the precast member according to the degree of damage;
a step of checking up matters related to whether to permit reuse of the interior units;
a step of reusing the precast member in an other building to be constructed; and
a step of reusing the interior units in the other building.

7. The reuse method for a building according to claim 6, further comprising a step of providing a predetermined section of the building for limited time use.

8. A reuse evaluation system for precast members of a building, the reuse evaluation system being configured for evaluating reusability of precast members that configure a frame of the building having a rigid frame structure and that contain precast concrete, wherein the building is provided with multiple precast members including multiple pillar members and multiple beam members, the reuse evaluation system comprising:
a sensor configured to be attached to at least one of the precast members of the building to measure a predetermined physical quantity, the at least one of the precast members being joined to another one of the precast members by an unbonded tendon; and
a monitoring device comprising a storage device for storing a detection result of the sensor, the monitoring device being configured to make the storage device store the physical quantity of the precast member during use of the building and to monitor the physical quantity,
wherein the monitoring device is configured to determine the reusability of the precast member based on the detection result of the sensor.

9. The reuse evaluation system for precast members of a building according to claim 8, wherein the monitoring device is configured to determine whether the physical quantity detected by the sensor is within a predetermined first reference value, and to determine that the precast member is reusable when the physical quantity is within the first reference value.

10. The reuse evaluation system for precast members of a building according to claim 9, wherein the monitoring device is configured to determine that member replacement is necessary when, during use of the building, the physical quantity of the precast member exceeds a second reference value greater than the first reference value.
